# EUROPÄISCHE PATENTSCHRIFT

(11) **EP 3 031 227 B1**
(45) Veröffentlichungstag und Bekanntmachung des Hinweises auf die Patenterteilung: **28.04.2021**
(21) Anmeldenummer: 14748121.2
(22) Anmeldetag: 01.08.2014
(51) Int. Cl.: H04W 12/08, H04W 12/10, H04W 12/00

(54) **VERFAHREN ZUM BETREIBEN EINES SICHERHEITSELEMENTS**
METHOD FOR OPERATING A SECURITY ELEMENT
PROCÉDÉ DE FONCTIONNEMENT D'UN ÉLÉMENT DE SÉCURITÉ

(30) Priorität: 07.08.2013 DE 102013013179
(43) Veröffentlichungstag der Anmeldung: 15.06.2016
(73) Patentinhaber: Giesecke+Devrient Mobile Security GmbH, 81677 München (DE)
(72) Erfinder: RÖSNER, Martin, 83527 Haag in Oberbayern (DE); MALDONADO MIRANDA, Carlos, 81927 München (DE)
(74) Vertreter: Ter Meer Steinmeister & Partner
(86) Internationale Anmeldenummer: PCT/EP2014/002123
(87) Internationale Veröffentlichungsnummer: WO 2015/018511

(56) Entgegenhaltungen:
- EP-A1- 2 048 594
- EP-A2- 2 112 595
- US-A1- 2012 108 205
- Sun ET AL: "Runtime Environment Specification Java Card(TM) Platform, Version 3.0.1 Connected Edition", , 31 May 2009 (2009-05-31), pages 1-334, XP055051641, Retrieved from the Internet: URL:http://www.oracle.com/technetwork/java /javasebusiness/downloads/java-archive-dow nloads-javame-419430.html#java_card_kit-3. 0.1-rr-spec-oth-JPR [retrieved on 2013-01-29]

## Beschreibung

### Gebiet der Erfindung

Die Erfindung betrifft ein Verfahren zum Betreiben eines Sicherheitselements sowie ein solches Sicherheitselement. Insbesondere betrifft die Erfindung ein Verfahren zum Verwalten von Betriebssystemmodulen auf einem Sicherheitselement sowie ein solches Sicherheitselement.

### Hintergrund der Erfindung

Sicherheitselemente ("Secure Elements") werden in vielen Bereichen eingesetzt, beispielsweise in Form von SIM-Karten zum Nachweis einer Zugangsberechtigung zu einem Mobilfunknetz oder in Form von Chipkarten zur Durchführung von Transaktionen des elektronischen Zahlungsverkehrs. Der Einsatz erfolgt dabei häufig im Zusammenspiel mit einem für die jeweilige Anwendung vorgesehenen Lese- bzw. Endgerät, beispielsweise einem Mobiltelefon oder einem Terminal. Außer bei sehr einfach gelagerten Anwendungen ist es in der Regel erforderlich, dass das Sicherheitselement über einen Prozessor verfügt, auf dem wenigstens eine Applikation zur Ausführung der Anwendung läuft. Viele Sicherheitselemente sind hierzu neben einer Applikation mit einem Betriebssystem ausgestattet, wobei der Programmcode der Applikation sowie der Programmcode, der das Betriebssystem darstellt, in einem nichtflüchtigen Speicher des Sicherheitselements gespeichert sind und im Betrieb von dessen Prozessor ausgeführt werden.

Um vielfältig einsetzbar zu sein, besteht ein Trend dahin, moderne Sicherheitselemente, beispielsweise SIM-Karten oder Chipkarten, hinsichtlich der Hardware und der Software mit immer mehr Funktionalitäten auszustatten. Es sind z.B. Dual-Interface-Karten bekannt, die zum einen eine NFC-Schnittstelle und zum anderen eine kontaktbehaftete Schnittstelle aufweisen, um sowohl kontaktlos als auch kontaktbehaftet mit einem jeweils entsprechend ausgestalteten Lesegerät kommunizieren zu können. Damit das Sicherheitselement auf diese unterschiedlichen Schnittstellen zugreifen kann, müssen im Betriebssystem des Sicherheitselements neben einem Betriebssystem-Kernel, der die grundlegenden Funktionen des Betriebssystems definiert, wie beispielsweise das Bereitstellen eines Dateisystems, in der Regel entsprechende Betriebssystem-Module in Form von speziellen Treibern zum Ansteuern der entsprechenden Schnittstellen hinterlegt sein.

Es ist nicht unüblich, dass bei der Herstellung eines solchen Sicherheitselements mit einer Vielzahl von Funktionalitäten noch nicht feststeht, wie dieses Sicherheitselement letztendlich eingesetzt wird, d.h. welche der Funktionalitäten des Sicherheitselements beim Einsatz im Feld tatsächlich aktiv benötigt werden. So kann es beispielsweise sein, dass bei einer Dual-Interface-Karte nur eine der beiden Schnittstellen beim Einsatz im Feld tatsächlich verwendet wird. Um jedoch für alle möglichen Einsatzgebiete gerüstet zu sein, wird bei der Herstellung eines Sicherheitselements dieses in der Regel so ausgeführt, dass beim Einsatz im Feld alle Funktionalitäten des Sicherheitselements zur Verfügung stehen. Dies erfordert jedoch beispielsweise, dass bereits bei der Auslieferung des Sicherheitselements dessen Betriebssystem alle diese Funktionalitäten unterstützen bzw. bereitstellen muss. Hierdurch kann das Problem auftreten, dass das Betriebssystem des Sicherheitselements für dessen tatsächlichen Einsatz im Feld "überdimensioniert" ist, d.h. Funktionalitäten bereitstellt und unterstützt, die beim tatsächlichen Einsatz des Sicherheitselements nicht benötigt werden. Ein derartiger "Betriebssystem-Overhead" kann unter Umständen beispielsweise die Performance des Sicherheitselements nachteilig beinträchtigen.

Aus der US 2012/108205 A1 geht ein Verfahren hervor, mit dem die Eigenschaften einer SIM-Karte auch nach der Übermittlung der SIM-Karte an den Kunden modifiziert werden können. Dazu werden Eigenschaften des SIM-Profils mittels der Luftschnittstelle verändert.

Weiterhin gehen aus der EP 2112 595 A2 und EP 2 048 594 A1 Verfahren zur optionalen Aktivierung von Betriebssystemmodulen hervor.

Vor diesem Hintergrund stellt sich der vorliegenden Erfindung die Aufgabe, ein verbessertes Verfahren zum Betreiben eines Sicherheitselements sowie ein entsprechend ausgestaltetes Sicherheitselement bereitzustellen.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Die Erfindung basiert auf dem Grundgedanken, das Sicherheitselement so zu betreiben, dass die Zugriffsberechtigungen auf Betriebssystem-Module des Sicherheitselements, die zusätzlich zu einem Betriebssystem-Kernel optionale Funktionalitäten des Sicherheitselements bereitstellen, angepasst werden können, wenn sich das Sicherheitselement bereits im Einsatz im Feld befindet. Vorzugsweise erfolgt diese Anpassung der Zugriffsberechtigungen auf Betriebssystem-Module des Sicherheitselements über die Luftschnittstelle, d.h. over-the-air (OTA). Unter einem Anpassen der Zugriffsberechtigungen auf Betriebssystem-Module wird hier insbesondere das Aktivieren bzw. Freischalten oder das Deaktivieren bzw. Sperren von Betriebssystem-Modulen verstanden. Dabei wird unter den Begriffen "Aktivieren" bzw. "Freischalten" von Betriebssystem-Modulen verstanden, dass die so aktivierten bzw. freigeschalteten Betriebssystem-Module ausgeführt werden können, um die durch die Betriebssystem-Module definierten Funktionalitäten zur Verfügung zu stellen.

Das erfindungsgemäße Aktivieren eines Betriebssystem-Moduls kann beispielsweise dann erforderlich sein, wenn neue Funktionen des Sicherheitselements aktiviert werden sollen, z.B. wenn ein Applet nachgeladen wird, das auf Hardware des Sicherheitselements zugreifen muss, die von einem bisher nicht aktivierten Betriebssystem-Modul, beispielsweise einem entsprechenden Treiber, unterstützt wird. Der andere Fall des erfindungsgemäßen Sperrens eines Betriebssystem-Moduls kann beispielsweise dazu vorteilhaft verwendet werden, ein sicherheitsrelevantes Betriebssystem-Modul, z.B. einen Kryptoalgorithmus, sobald dieser nicht mehr benötigt wird, zu deaktivieren bzw. sperren, um es so einem Angreifer zu erschweren, Informationen über die von dem sicherheitsrelevanten Betriebssystem-Modul verwendeten Daten, z.B. kryptographische Schlüssel, zu gewinnen.

Auf der Grundlage des vorstehend beschriebenen Grundgedankens wird gemäß einem ersten Aspekt der Erfindung ein Verfahren zum Betreiben eines Sicherheitselements mit einem Prozessor und einem Speicher bereitgestellt. Auf dem Speicher sind ein Betriebssystem, das einen Betriebssystem-Kernel und wenigstens ein zusätzliches Betriebssystem-Modul zur Bereitstellung optionaler bzw. zusätzlicher Betriebssystem-Funktionalitäten umfasst, sowie wenigstens eine dem Betriebssystem-Modul zugeordnete Zugriffsberechtigung hinterlegt, die bestimmt, ob im Betrieb des Sicherheitselements auf das Betriebssystem-Modul zuggegriffen werden kann. Dabei umfasst das Verfahren den Schritt des Änderns der Zugriffsberechtigung auf das Betriebssystem-Modul in Reaktion auf das Empfangen einer Nachricht von einem Server.

Unter optionalen bzw. zusätzlichen Betriebssystem-Funktionalitäten werden hier insbesondere solche Betriebssystem-Funktionalitäten verstanden, die nicht von dem Betriebssystem-Kernel des Sicherheitselements bereitgestellt werden.

Vorzugsweise handelt es sich bei der Nachricht von dem Server um eine OTA-Nachricht, die vorzugsweise über ein Mobilfunknetz vom Server an das Sicherheitselement gesendet wird.

Gemäß bevorzugter Ausführungsformen der Erfindung umfasst der Schritt des Änderns der Zugriffsberechtigung auf das wenigstens eine Betriebssystem-Modul ein Freischalten oder ein Sperren des Zugriffs auf das wenigstens eine Betriebssystem-Modul.

Vorzugsweise wird das Verfahren auf einem Sicherheitselement in Form einer Java Card™ ausgeführt, auf der eine Java Card™ Laufzeitumgebung implementiert ist, die eine Java Card™ Virtual Machine und eine Vielzahl von Java Card™ APIs (Application Programming Interfaces; Programmierschnittstellen) umfasst.

Bei dieser bevorzugten Ausführungsform ist dem Betriebssystem-Modul wenigstens eine API der Vielzahl von Java Card™ APIs derart zugeordnet, dass für den Fall, dass die Zugriffsberechtigung bestimmt, dass im Betrieb des Sicherheitselements auf das Betriebssystem-Modul nicht zuggegriffen werden kann, d.h. das Betriebssystem-Modul nicht ausgeführt werden kann, der Zugriff auf die entsprechende wenigstens eine API zwar möglich ist, dabei von der wenigstens einen API jedoch keine Aktion durchgeführt wird.

Gemäß bevorzugter Ausführungsformen der Erfindung wird der Schritt des Änderns der Zugriffsberechtigung auf das Betriebssystem-Modul mittels einer Security Domain durchgeführt, die auf dem Sicherheitselement implementiert ist. Vorzugsweise kann die Security Domain, die bevorzugt in Form eines Java Card™ Applets implementiert ist, nicht gelöscht werden. Vorzugsweise umfasst das Verfahren die weiteren Schritte des Verschlüsselns der Nachricht von dem Server und des Entschlüsselns der Nachricht durch das Sicherheitselement. Vorzugsweise kommt hierbei ein sicherheitselementindividueller Schlüssel zum Einsatz.

Gemäß bevorzugter Ausführungsformen der Erfindung umfasst das Verfahren den weiteren Schritt des Überprüfens einer über die Nachricht vom Server gebildeten Prüfsumme durch das Sicherheitselement.

Vorzugsweise wird auf dem Sicherheitselement und/oder auf dem Server eine Modulliste gepflegt, in der neben dem wenigstens einen Betriebssystem-Modul ein Aktivierungszustand des wenigstens einen Betriebssystem-Moduls aufgeführt ist.

Gemäß einem zweiten Aspekt der Erfindung wird ein Sicherheitselement bereitgestellt. Das erfindungsgemäße Sicherheitselement enthält einen Prozessor und einen Speicher, auf dem ein Betriebssystem, das einen Betriebssystem-Kernel und wenigstens ein zusätzliches Betriebssystem-Modul zur Bereitstellung optionaler bzw. zusätzlicher Betriebssystem-Funktionalitäten umfasst, sowie wenigstens eine dem Betriebssystem-Modul zugeordnete Zugriffsberechtigung hinterlegt sind, die bestimmt, ob im Betrieb des Sicherheitselements auf das Betriebssystem-Modul zuggegriffen werden kann. Dabei ist das erfindungsgemäße Sicherheitselement dazu ausgestaltet, die Zugriffsberechtigung auf das Betriebssystem-Modul in Reaktion auf das Empfangen einer Nachricht von einem Server zu ändern.

Vorzugsweise handelt es sich bei dem Sicherheitselement um eine Chipkarte, insbesondere in Form einer Java Card™. Entsprechend sind die Security Domain und die wenigstens eine Applikation vorzugsweise als auf dem Sicherheitselement ausführbare Java Card™ Applets ausgebildet. Bestehende Java Card™ Komponenten, also Laufzeitumgebung, Virtuelle Maschine und Klassenbibliothek, können unverändert beibehalten werden. Die beschriebene Erweiterung des bekannten Systems mittels der Security Domain erweitert die Funktionalität des Systems erheblich, während der Aufwand zur Anpassung minimal ist und bestehende Sicherheitsvorgaben weder verletzt noch eingeschränkt werden.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Betreiben eines Sicherheitselements, als auch im Rahmen des zweiten Aspekts der Erfindung, d.h. im Rahmen des Sicherheitselements, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines erfindungsgemäßen Sicherheitselements in Form einer Chipkarte in Kommunikation mit einer externen Instanz in Form eines Lesegeräts,
- Fig. 2: eine schematische Darstellung einer bevorzugten Softwarearchitektur des erfindungsgemäßen Sicherheitselements in Form einer Chipkarte von Figur 1 und
- Fig. 3: eine schematische Darstellung eines bevorzugten Ablaufs beim Betreiben des Sicherheitselements in Form einer Chipkarte von Figur 1.

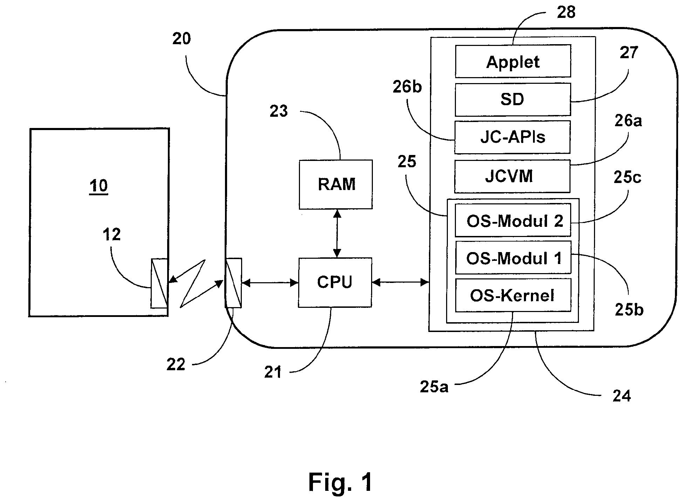

Figur 1 zeigt eine schematische Darstellung einer bevorzugten Ausführungsform eines erfindungsgemäßen Sicherheitselements ("Secure Element") in Form einer Chipkarte 20 in Kommunikation mit einer externen Instanz in Form eines Lesegeräts bzw. Terminals 10. Beispielsweise kann es sich bei dem Sicherheitselement 20 um eine SIM-Karte handeln. Vorzugsweise ist das Sicherheitselement in Form der Chipkarte 20 als Java Card™ ausgestaltet. Selbstverständlich kann die vorliegende Erfindung jedoch auch in Form eines Sicherheitselements mit einer anderen Bauform und unter Verwendung eines anderen Betriebssystems verwirklicht werden.

Das in Figur 1 dargestellte Sicherheitselement 20 in Form einer Chipkarte 20 ist dazu ausgestaltet mit dem Lesegerät 10 Daten auszutauschen. Das Lesegerät 10 kann beispielsweise Teil eines Mobiltelefons sein. Als ein Austausch von Daten wird hier eine Signalübertragung, eine wechselseitige Steuerung und in einfachen Fällen auch eine Verbindung zwischen dem Lesegerät 10 und der Chipkarte 20 verstanden. In der Informationstheorie wird ein Datenaustausch insbesondere durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht, d.h. die auszutauschenden Daten dekodieren kann.

Zur Datenübertragung bzw. Kommunikation zwischen der Chipkarte 20 und dem Lesegerät 10 weisen sowohl die Chipkarte 20 als auch das Lesegerät 10 geeignete Kommunikationsschnittstellen 22 und 12 auf. Die Schnittstellen 22 und 12 können beispielsweise so ausgestaltet sein, dass die Kommunikation zwischen diesen bzw. zwischen der Chipkarte 20 und dem Lesegerät 10 kontaktlos, d.h. über die Luftschnittstelle bzw. over-the-air (OTA), erfolgt, wie dies in Figur 1 durch den gezackten Pfeil angedeutet ist. Alternativ kann die Chipkarte 20 über die Schnittstelle 22 galvanisch, d.h. kontaktbehaftet, mit der Schnittstelle 12 des Lesegeräts 10 verbunden werden. In diesem Fall ist die Schnittstelle 22 in der Regel als ein auf einer Seite der Chipkarte 20 angeordnetes Kontaktfeld mit Kontaktflächen zum Datenaustausch mit dem Lesegerät 10 ausgebildet. Selbstverständlich werden von der vorliegenden Erfindung auch Chipkarten umfasst, die sowohl eine Schnittstelle zur kontaktbehafteten als auch eine Schnittstelle zur kontaktlosen Kommunikation mit einem Lesegerät aufweisen und die dem Fachmann als Dual-Interface-Chipkarten bekannt sind.

Neben der Schnittstelle 22 zur Kommunikation mit dem Lesegerät 10 umfasst die Chipkarte 20 eine zentrale Prozessor- bzw. Recheneinheit (CPU; auch Prozessor genannt) 21, die in Kommunikationsverbindung mit der Schnittstelle 22 steht. Der Prozessor 21 steht ferner mit einem flüchtigen Arbeitsspeicher (RAM) 23 und einem nichtflüchtigen wieder beschreibbaren Speicher 24 in Verbindung. Vorzugsweise handelt es sich bei dem nichtflüchtigen Speicher 24 um einen Flash-Speicher (Flash-EEPROM). Dabei kann es sich beispielsweise um einen Flash-Speicher mit einer NAND- oder einer NOR-Architektur handeln. Neben einem wieder beschreibbaren Teil kann der nichtflüchtige Speicher 24 ferner einen ROM aufweisen.

Bei der in Figur 1 dargestellten bevorzugten Ausführungsform ist in dem nichtflüchtigen Speicher 24 der Chipkarte 20 Programmcode gespeichert, der von dem Prozessor 21 ausgeführt werden kann. Insbesondere kann in dem nichtflüchtigen Speicher 24 der Chipkarte 20 der Programmcode des Chipkarten-Betriebssystems 25 (OS) gespeichert sein, das sich vorzugsweise aus einem Betriebssystem-Kernel 25a (OS-Kernel) sowie beispielshaft einem ersten Betriebssystem-Modul 25b (OS-Modul 1) und einem zweiten Betriebssystem-Modul 25c (OS-Modul 2) zur Bereitstellung optionaler bzw. zusätzlicher Betriebssystem-Funktionalitäten zusammensetzt. Ferner kann in dem nichtflüchtigen Speicher 24 der Chipkarte 20 der Programmcode einer Java Card™ Virtual Machine 26a (JCVM; Java Card Virtuelle Maschine) mit einer Vielzahl von Java Card™ Application Programming Interfaces (JC APIs; auch Klassenbibliotheken genannt) 26b, einer Security-Domain 27 und einer Applikation 28 hinterlegt sein. Dabei liegt die Applikation 28 vorzugsweise in Form eines Java Card™ Applets vor.

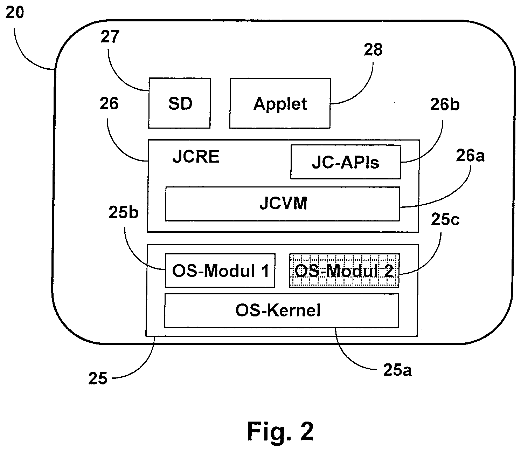

Figur 2 zeigt eine schematische Darstellung einer bevorzugten Software-Architektur des erfindungsgemäßen Sicherheitselements in Form einer Chipkarte 20 von Figur 1. Dabei setzt eine Java Card™ Laufzeitumgebung (JCRE; java card runtime environment) 26 auf dem nativen Betriebssystem 25 der Chipkarte 20 auf, das, wie vorstehend bereits beschrieben, vorzugsweise aus einem Betriebssystem-Kernel 25a (OS-Kernel) und beispielhaft aus einem ersten Betriebssystem-Modul 25b (OS-Modul 1) und einem zweiten Betriebssystem-Modul 25c (OS-Modul 2) zur Bereitstellung optionaler Betriebssystem-Funktionalitäten besteht. In der Regel werden das native Betriebssystem 25 und die Java Card™ Laufzeitumgebung (JCRE) 26 vom Hersteller bzw. Herausgeber der Chipkarte 20 bei der Herstellung der Chipkarte 20 auf dieser implementiert.

Die Java Card™ Laufzeitumgebung (JCRE) 26 umfasst die Java Card™ Virtual Machine 26a (JCVM) sowie die vorstehend bereits erwähnte Vielzahl von Java Card™ APIs 26b. Diese Vielzahl von Java Card™ APIs 26b ermöglichen es dem in der Softwarehierarchie darüber liegenden Applet 28 auf Funktionen zuzugreifen, die von den darunter liegenden Softwareschichten bereitgestellt werden, d.h. dem nativen Betriebssystem 25 und/ oder der Java Card™ Virtual Machine 26a (JCVM). Wie der Fachmann erkennt, handelt es sich bei den bisher beschriebenen Komponenten im Wesentlichen um die herkömmliche Software-Architektur einer Java Card. Für weitere Details hierzu wird auf das Buch "Java Card™ Technology for Smart Cards", Zhiqun Chen, Addison-Wesley, 2000 verwiesen, auf das hiermit vollumfänglich Bezug genommen wird.

Gegenüber einer herkömmlichen Java Card™ ist erfindungsgemäß nun vorgesehen, dass das Sicherheitselement in Form der Chipkarte 20 derart ausgestaltet ist, dass die Zugriffsberechtigungen auf die Betriebssystem-Module der Chipkarte 20 zur Bereitstellung optionaler Betriebssystem-Funktionalitäten insbesondere bei deren Einsatz im Feld angepasst bzw. geändert werden können. Dies wird in Figur 2 schematisch anhand des ersten Betriebssystem-Moduls 25b (OS-Modul 1) und des zweiten Betriebssystem-Moduls 25c (OS-Modul 2) illustriert. In dem in Figur 2 dargestellten beispielhaften Zustand ist das erste Betriebssystem-Modul 25b (OS-Modul 1) aktiviert bzw. freigeschaltet und das zweite Betriebssystem-Modul 25c (OS-Modul 2) deaktiviert bzw. gesperrt (was durch die gitterförmige Hinterlegung in Figur 2 angedeutet ist).

Bei dem ersten Betriebssystem-Modul 25b (OS-Modul 1) oder dem zweiten Betriebssystem-Modul 25c (OS-Modul 2) zur Bereitstellung optionaler Betriebssystem-Funktionalitäten, die, wie vorstehend beschrieben, nicht Teil des Betriebssystem-Kernels 25a sind, der die grundlegenden Funktionalitäten des Betriebssystems 25 definiert, wie beispielsweise das Bereitstellen eines Dateisystems, kann es sich beispielsweise um eines der folgenden Betriebssystem-Module handeln: Module zur Implementierung von Kryptoalgorithmen, wie DES, RSA, AES, DSA, MD5, HMAC, ECC, ein Modul zur Implementierung eines Webservers auf der Chipkarte 20, Module zur Implementierung von Kommunikationsprotokollen, wie SWP (single wire protocol), NFC (near field communication), und dergleichen.

Erfindungsgemäß ist nun vorgesehen, dass sich das deaktivierte bzw. gesperrte zweite Betriebssystem-Modul 25c (OS-Modul 2) aktivieren bzw. freischalten lässt, so dass die in der Softwarehierarchie darüber liegenden Schichten nicht nur auf das bereits aktivierte bzw. freigeschaltete Betriebssystem-Modul 25b (OS-Modul 1), sondern auch auf das zweite Betriebssystem-Modul 25c (OS-Modul 2) zugreifen können. Ebenfalls ist erfindungsgemäß vorgesehen, dass sich das aktivierte bzw. freigeschaltete erste Betriebssystem-Modul 25b (OS-Modul 1) deaktivieren bzw. sperren lässt.

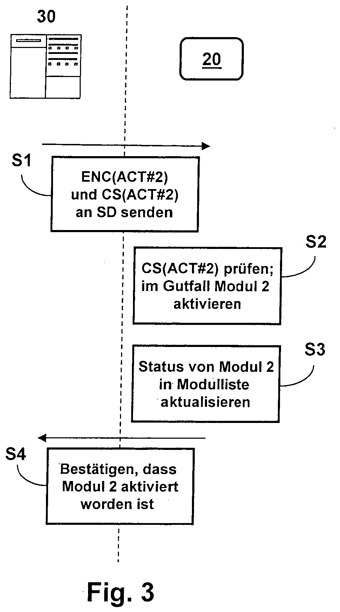

Vorzugsweise ist hierzu auf der Chipkarte 20 eine Security Domain 27 (SD; auch Sicherheitsbereich genannt) vorgesehen. Softwaretechnisch kann es sich bei der Security Domain 27 (SD) ebenfalls um ein spezielles Applet handeln, was in Figur 2 dadurch angedeutet ist, dass die Security Domain 27 (SD) in der Softwarehierarchie auf derselben Ebene liegt wie das Applet 28. Wie beispielhaft das zweite Betriebssystem-Modul 25c (OS-Modul 2) gemäß einer bevorzugten Ausführungsform der Erfindung unter Verwendung der Security Domain 27 (SD) freigeschaltet werden kann, wird nachstehend unter weiterer Bezugnahme auf die Figur 3 beschrieben.

Figur 3 zeigt eine schematische Darstellung eines bevorzugten Ablaufs beim Aktivieren bzw. Freischalten eines Betriebssystem-Moduls auf dem erfindungsgemäßen Sicherheitselement in Form einer Chipkarte 20 von Figur 1, und zwar beispielhaft des im Zusammenhang mit den Figuren 1 und 2 bereits beschriebenen zweiten Betriebssystem-Moduls 25c (OS-Modul 2). Bei der in Figur 3 dargestellten bevorzugten Ausführungsform wird der Vorgang durch einen Server 30 angestoßen, der in Kommunikation mit der Chipkarte 20 steht. Vorzugsweise kommunizieren der Server 30 und die Chipkarte 20 über ein Mobilfunknetz, so dass die Kommunikation zwischen dem Server 30 und der Chipkarte 20 over-the-air (OTA) erfolgt. Erfindungsgemäß ist es ebenfalls vorstellbar, dass das Freischalten eines Betriebssystem-Moduls durch eine entsprechende Anfrage der Chipkarte 20 an den Server 30 in Gang gesetzt wird. Vorzugsweise wird der Server 30 vom Hersteller und/oder dem Herausgeber der Chipkarte 20, beispielsweise einem Mobilfunknetzbetreiber, betrieben.

In Schritt S1 von Figur 3 sendet der Server 30 einen Befehl zum Aktivieren des zweiten Betriebssystem-Moduls 25c (OS-Modul 2) an die Security Domain 27 (SD) der Chipkarte 20. In Figur 3 lautet dieser Befehl beispielhaft "ACT#2" für "Aktiviere Modul Nr. 2". Vorzugsweise richten sich die vom Server 30 und der Chipkarte 20 verwendeten Befehle nach einschlägigen Standards, wie dem "Global Plattform"-Standard und/oder ETSI-Standards.

Vorzugsweise wird der Befehl zum Aktivieren des zweiten Betriebssystem-Moduls 25c (OS-Modul 2) vom Server 30 mit einem Verschlüsselungsalgorithmus ENC unter Verwendung eines kartenindividuellen kryptographischen Schlüssels verschlüsselt und der derart verschlüsselte Befehl ENC(ACT#2) in Schritt S1 von Figur 3 an die Chipkarte 20 gesendet. Ein solcher kartenindividueller kryptographischer Schlüssel kann beispielsweise bei der Herstellung und/oder der Personalisierung der Chipkarte 20 durch den Hersteller oder den Herausgeber der Chipkarte 20 auf dieser vorzugsweise in der Security Domain 27 (SD) sicher hinterlegt werden.

Weiter bevorzugt wird neben dem verschlüsselten Befehl eine über den Befehl gebildete Prüfsumme CS(ACT#2) an die Chipkarte 20 gesendet. Wie dies dem Fachmann bekannt ist, kann eine geeignete Prüfsumme CS beispielsweise mittels einer schlüssellosen Hashfunktion oder einer schlüsselbasierten Hashfunktion (auch unter dem Namen MAC bekannt) erzeugt und überprüft werden.

In Schritt S2 von Figur 3 überprüft die Chipkarte 20 zunächst die Integrität des vom Server 30 in Schritt S1 erhaltenen Befehls, indem die Chipkarte 20 die Prüfsumme über den entschlüsselten Befehl bildet und diese Prüfsumme mit der vom Server 30 in Schritt S1 erhaltenen Prüfsumme CS(ACT#2) vergleicht. Stimmen diese beiden Prüfsummen überein, d.h. im Gutfall, wird der Befehl von der Chipkarte 20 ausgeführt, d.h. das zweite Betriebssystem-Modul 25c (OS-Modul 2) wird aktiviert. Vorzugsweise werden die Schritte des Entschlüsselns des vom Server 30 in Schritt S1 erhaltenen verschlüsselten Befehls, des Bildens einer Prüfsumme über diesen Befehl und des Vergleichens der Prüfsummen von der Security Domain 27 (SD) der Chipkarte 20 durchgeführt.

Das Aktivieren des zweiten Betriebssystem-Moduls 25c (OS-Modul 2) in Schritt S2 von Figur 3 kann beispielsweise dadurch geschehen, dass die Zugriffsberechtigungen auf das zweite Betriebssystem-Modul 25c (OS-Modul 2) derart geändert werden, dass, wie vorstehend im Zusammenhang mit Figur 2 beschrieben, in der Softwarehierarchie oberhalb des Betriebssystems 25 liegende Komponenten, insbesondere die Java Card™ Laufzeitumgebung (JCRE) 26 bzw. die Java Card™ Virtual Machine 26a (JCVM) sowie die Vielzahl von Java Card™ APIs 26b und somit das Applet 28, auf das zweite Betriebssystem-Modul 25c (OS-Modul 2) zugreifen können.

Gemäß bevorzugter Ausführungsformen der Erfindung sind auf der Chipkarte 20 und vorzugsweise in deren Security Domain (SD) 27 Informationen über die auf der Chipkarte 20 zur Verfügung stehenden Betriebssystem-Module sowie über deren jeweiligen Zustand bzw. Status sicher hinterlegt, d.h. ob ein jeweiliges Betriebssystem-Modul aktiviert bzw. freigeschaltet oder deaktiviert bzw. gesperrt ist. Diese Informationen können beispielsweise in Form einer Modulliste in der Security Domain (SD) 27 der Chipkarte 20 vorliegen, in der jedes Betriebssystem-Modul mit seinem jeweiligen Zustand aufgeführt ist und die von dem Server 30 ggf. nach einer vorherigen Authentisierung abgefragt werden kann. Alternativ oder zusätzlich kann eine solche Modulliste auch auf dem Server 30 gepflegt werden. Der jeweilige Anfangszustand, d.h. aktiviert bzw. freigeschaltet oder deaktiviert bzw. gesperrt, der Betriebssystem-Module der Chipkarte 20 kann beispielsweise im Rahmen der Herstellung und/oder der Personalisierung der Chipkarte 20 definiert werden.

Nachdem in Schritt S2 von Figur 3 die Security Domain (SD) 27 der Chipkarte 20 das zweite Betriebssystem-Modul 25c (OS-Modul 2) aktiviert hat, wird in Schritt S3 die in der Security Domain (SD) 27 hinterlegte Modulliste aktualisiert, indem der Zustand des zweiten Betriebssystem-Modul 25c (OS-Modul 2) in der Modulliste von deaktiviert auf aktiviert gesetzt wird. Anschließend bestätigt die Chipkarte 20 dem Server 30 in Schritt S4 von Figur 3, dass das zweite Betriebssystem-Modul 25c (OS-Modul 2) aktiviert worden ist, und zwar vorzugsweise OTA mittels einer entsprechenden Bestätigungsnachricht von der Security Domain (SD) 27 der Chipkarte 20.

Die Security Domain (SD) 27 der Chipkarte 20, die vorzugsweise ebenfalls bei der Herstellung und/oder der Personalisierung der Chipkarte 20 auf dieser implementiert wird, ist vorzugsweise derart ausgestaltet, dass diese nicht gelöscht werden kann. Wie vorstehend bereits beschrieben, ist die Security Domain (SD) 27 vorzugsweise als ein Applet ausgebildet. Derart ausgestaltete Security Domains sind aus dem "Global Platform"-Standard bekannt. Alternativ oder zusätzlich kann die Security Domain (SD) 27 der Chipkarte 20 als eine Erweiterung der Laufzeitumgebung, d.h. vorzugsweise der Java Card™ Laufzeitumgebung (JCRE) 26 implementiert sein.

Wie dies dem Fachmann bekannt ist, kann es vorteilhaft sein, die in Figur 3 dargestellten Schritte, bei denen ein kryptographischer Schlüssel zur Verschlüsselung bzw. Entschlüsselung und ggf. zum Erstellen einer Prüfsumme zum Einsatz kommt, mittels eines aus dem kartenindividuellen Schlüssel abgeleiteten Sitzungsschlüssels durchzuführen, der beispielsweise auf einer zwischen dem Server 30 und der Chipkarte 20 ausgehandelten Zufallszahl basiert.

Der Fachmann wird erkennen, dass die vorliegende Erfindung nicht auf die in Figur 3 dargestellte bevorzugte Abfolge und die dort gezeigten Details beschränkt ist.

Beispielsweise könnte die Integrität des Befehls zum Anpassen der Zugriffsberechtigungen auf ein Betriebssystem-Modul auf eine andere Art und Weise überprüft werden, als wie dies in Figur 3 dargestellt und vorstehend beschrieben worden ist. Beispielsweise könnte die Prüfsumme statt über den Befehl im Klartext auch über den verschlüsselten Befehl "ENC(ACT#2)" gebildet werden.

Ferner könnte vor den in Figur 3 gezeigten Schritten der Server 30 zunächst die Identität der Chipkarte 20 bestimmen, indem die Chipkarte 20 dem Server 30 ein eindeutiges Identifizierungsdatum übermittelt, das es dem Server 30 erlaubt, einen entsprechenden kartenindividuellen kryptographischen Schlüssel zu bestimmen und die nachfolgende Kommunikation mit der Chipkarte 20 kryptographisch abzusichern. In diesem Zusammenhang ist es ebenfalls denkbar, dass zunächst eine einseitige oder gegenseitige Authentisierung zwischen dem Server 30 und der Chipkarte 20 vorteilhaft sein kann.

Gemäß einer weiteren Alternative ist es denkbar, dass vor dem Schritt S1 in Figur 3 der Server 30 zunächst die Modulliste von der Chipkarte 20 abfragt, um damit den Zustand der Betriebssystem-Module der Chipkarte 20 zu bestimmen und auf dieser Grundlage zu entscheiden, ob mittels eines entsprechenden Befehls an die Chipkarte 20 ein oder mehrere Betriebssystem-Module aktiviert oder deaktiviert werden müssen.

## Patentansprüche

1. Verfahren zum Betreiben eines Sicherheitselements (20) mit einem Prozessor (21) und einem Speicher (24), auf dem ein Betriebssystem (25), das einen Betriebssystem-Kernel (25a) und wenigstens ein zusätzliches Betriebssystem-Modul (25b, 25c) zur Bereitstellung optionaler Betriebssystem-Funktionalitäten umfasst, sowie wenigstens eine dem Betriebssystem-Modul (25b, 25c) zugeordnete Zugriffsberechtigung hinterlegt sind, die bestimmt, ob im Betrieb des Sicherheitselements (20) auf das Betriebssystem-Modul (25b, 25c) zugegriffen werden kann, mit den Verfahrensschritten:
Pflegen, auf dem Sicherheitselement (20), einer Modulliste, in der neben dem wenigstens einen zusätzlichen Betriebssystem-Modul (25b, 25c) ein Aktivierungszustand des wenigstens einen zusätzlichen Betriebssystem-Moduls (25b, 25c) aufgeführt ist;
Abfragen der Modulliste von einem Server (30), um den Aktivierungszustand der Betriebssystem-Module (25b, 25c) zu bestimmen;
Ändern, durch das Sicherheitselement (20), einer auf dem Speicher (24) hinterlegten Zugriffsberechtigung auf wenigstens eines der zusätzlichen Betriebssystem-Module (25b, 25c) zur Bereitstellung optionaler Betriebssystem-Funktionalitäten in Reaktion auf ein Empfangen einer Nachricht von dem Server (30) zum Freischalten oder Sperren des Zugriffs auf das wenigstens eine zusätzliche Betriebssystem-Modul (25b, 25c).

2. Verfahren nach Anspruch 1, wobei vor dem Ändern-Schritt auf der Grundlage der abgefragten Modulliste im Server (30) entschieden wird, ob mittels eines entsprechenden Befehls an das Sicherheitselement (20) das wenigstens eine zusätzliche Betriebssystem-Modul (25b, 25c) zu aktivieren oder deaktivieren ist.

3. Verfahren nach Anspruch 1, wobei es sich bei der Nachricht vom Server (30) um eine OTA-Nachricht handelt.

4. Verfahren nach Anspruch 3, wobei die Nachricht über ein Mobilfunknetz vom Server (30) an das Sicherheitselement (20) gesendet wird.

5. Verfahren nach Anspruch 1, wobei es sich bei dem Sicherheitselement (20) um eine Chipkarte handelt, auf der eine Laufzeitumgebung (26) implementiert ist, die eine Virtual Machine (26a) und eine Vielzahl von Klassenbibliotheken, APIs, (26b) umfasst.

6. Verfahren nach Anspruch 5, wobei dem Betriebssystem-Modul (25b, 25c) wenigstens eine API der Vielzahl von APIs (26b) derart zugeordnet ist, dass für den Fall, dass die Zugriffsberechtigung bestimmt, dass im Betrieb des Sicherheitselements (20) auf das Betriebssystem-Modul (25b, 25c) nicht zuggegriffen werden kann, der Zugriff auf die entsprechende wenigstens eine API zwar möglich ist, dabei von der wenigstens einen API jedoch keine Aktion durchgeführt wird.

7. Verfahren nach Anspruch 1, wobei der Schritt des Änderns der Zugriffsberechtigung auf das Betriebssystem-Modul (25b, 25c) mittels einer Security Domain (27) durchgeführt wird, die auf dem Sicherheitselement (20) implementiert ist.

8. Verfahren nach Anspruch 1, wobei das Verfahren die weiteren Schritte des Verschlüsselns der Nachricht von dem Server (30) und des Entschlüsselns der Nachricht durch das Sicherheitselement (20) umfasst.

9. Verfahren nach Anspruch 8, wobei das Entschlüsseln mittels einer Security Domain (27) durchgeführt wird.

10. Verfahren nach Anspruch 1, wobei das Verfahren den weiteren Schritt des Überprüfens einer über die Nachricht vom Server (30) gebildeten Prüfsumme durch das Sicherheitselement (20) umfasst.

11. Verfahren nach Anspruch 10, wobei das Überprüfen mittels einer Security Domain (27) durchgeführt wird.

12. Verfahren nach Anspruch 7, 9 oder 11, wobei die Security Domain (27) nicht gelöscht werden kann.

13. Sicherheitselement (20) mit einem Prozessor (21) und einem Speicher (24), auf dem ein Betriebssystem (25), das einen Betriebssystem-Kernel (25a) und wenigstens ein zusätzliches Betriebssystem-Modul (25b, 25c) zur Bereitstellung optionaler Betriebssystem-Funktionalitäten umfasst, sowie wenigstens eine dem Betriebssystem-Modul (25b, 25c) zugeordnete Zugriffsberechtigung hinterlegt sind, die bestimmt, ob im Betrieb des Sicherheitselements (20) auf das Betriebssystem-Modul (25b, 25c) zugegriffen werden kann, wobei das Sicherheitselement (20) dazu ausgestaltet ist:
- eine Modulliste zu pflegen, in der neben dem wenigstens einen zusätzlichen Betriebssystem-Modul (25b, 25c) ein Aktivierungszustand des wenigstens einen zusätzlichen Betriebssystem-Moduls (25b, 25c) aufgeführt ist,
- die Modulliste auf Anfrage einem Server (30) bereitzustellen, um serverseitig den Aktivierungszustand der Betriebssystem-Module (25b, 25c) zu bestimmen,
- die Zugriffsberechtigung auf wenigstens eines der zusätzlichen Betriebssystem-Module (25b, 25c) zur Bereitstellung optionaler Betriebssystem-Funktionalitäten in Reaktion auf das Empfangen einer Nachricht von einem Server (30) durch den Prozessor des Sicherheitselements (20) zu ändern, um den Zugriff auf das wenigstens eine zusätzliche Betriebssystem-Modul (25b, 25c) freizuschalten oder zu sperren.

14. Sicherheitselement (20) gemäß Anspruch 13, wobei das Sicherheitselement (20) eine Chipkarte ist.

15. Sicherheitselement (20) gemäß Anspruch 13 oder 14, eingerichtet zum Implementieren eines Verfahrens zum Betreiben eines Sicherheitselements (20) gemäß einer der Ansprüche 1 bis 12.

## Claims

1. Process for operating a security element (20) having a processor (21) and a memory (24) on which an operating system (25), which comprises an operating system kernel (25a) and at least one additional operating system module (25b, 25c) for providing optional operating system functionalities, and at least one access authorization assigned to the operating system module (25b, 25c) are stored, which authorization determines whether the operating system module (25b, 25c) can be accessed during operation of the security element (20), comprising the following process steps:
maintenance, on the security element (20), of a module list in which an activation state of the at least one additional operating system module (25b, 25c) is listed in addition to the at least one additional operating system module (25b, 25c);
requesting of the module list by a server (30) in order to determine the activation state of the operating system modules (25b, 25c);
modification, by the security element (20), of an access authorization stored in the memory (24) to at least one of the additional operating system modules (25b, 25c) for providing optional operating system functionalities in response to receiving a message from the server (30) to enable or disable the access to the at least one additional operating system module (25b, 25c).

2. Process according to claim 1, wherein, prior to the modification step, it is decided in the server (30), on the basis of the requested module list, whether to activate or deactivate the at least one additional operating system module (25b, 25c) by means of a corresponding command to the security element (20).

3. Process according to claim 1, wherein the message from the server (30) is an OTA message.

4. Process according to claim 3, wherein the message is sent from the server (30) to the security element (20) via a cellular network.

5. Process according to claim 1, wherein the security element (20) is a chip card on which a runtime environment (26) comprising a virtual machine (26a) and a large number of class libraries, APIs, (26b) is implemented.

6. Process according to claim 5, wherein at least one API of the large number of APIs (26b) is assigned to the operating system module (25b, 25c) in such a way that, if the access authorization determines that the operating system module (25b, 25c) cannot be accessed during operation of the security element (20), access to the corresponding at least one API is possible but no action is performed by the at least one API.

7. Process according to claim 1, wherein the step of modification of the access authorization to the operating system module (25b, 25c) is carried out by means of a security domain (27) which is implemented on the security element (20).

8. Process according to claim 1, wherein the process comprises the further steps of encrypting the message from the server (30) and decrypting the message by means of the security element (20).

9. Process according to claim 8, wherein the decryption is carried out by means of a security domain (27).

10. Process according to claim 1, wherein the process comprises the further step of checking, by the security element (20), a checksum formed via the message from the server (30).

11. Process according to claim 10, wherein the checking is carried out by means of a security domain (27).

12. Process according to claim 7, 9 or 11, wherein the security domain (27) cannot be deleted.

13. Security element (20) having a processor (21) and a memory (24) on which an operating system (25), which comprises an operating system kernel (25a) and at least one additional operating system module (25b, 25c) for providing optional operating system functionalities, and at least one access authorization assigned to the operating system module (25b, 25c) are stored, which authorization determines whether the operating system module (25b, 25c) can be accessed during operation of the security element (20), wherein the security element (20) is designed:
- to maintain a module list in which an activation state of the at least one additional operating system module (25b, 25c) is listed in addition to the at least one additional operating system module (25b, 25c),
- to provide the module list to a server (30) on request to determine the activation state of the operating system modules (25b, 25c) on the server side,
- to modify the access authorization to at least one of the additional operating system modules (25b, 25c) for providing optional operating system functionalities in response to the processor of the security element (20) receiving a message from a server (30) to enable or disable the access to the at least one additional operating system module (25b, 25c).

14. Security element (20) according to claim 13, wherein the security element (20) is a chip card.

15. Security element (20) according to claim 13 or 14, designed to implement a process for operating a security element (20) according to any of claims 1 to 12.

## Revendications

1. Procédé pour faire fonctionner un élément de sécurité (20) ayant un processeur (21) et une mémoire (24) sur laquelle sont stockés un système d'exploitation (25) qui comporte un noyau de système d'exploitation (25a) et au moins un module supplémentaire de système d'exploitation (25b, 25c) pour fournir des fonctionnalités optionnelles de système d'exploitation, ainsi qu'au moins un droit d'accès associé au module de système d'exploitation (25b, 25c), qui détermine s'il est possible d'accéder au module de système d'exploitation (25b, 25c) pendant le fonctionnement de l'élément de sécurité (20), comportant les étapes de procédé consistant à :
mettre à jour, sur l'élément de sécurité (20), une liste de modules dans laquelle, en plus du au moins un module supplémentaire de système d'exploitation (25b, 25c), est spécifié un état d'activation du au moins un module supplémentaire de système d'exploitation (25b, 25c),
interroger la liste de modules à partir d'un serveur (30) afin de déterminer l'état d'activation des modules de système d'exploitation (25b, 25c),
modifier, par l'élément de sécurité (20), un droit d'accès stocké sur la mémoire (24) au moins un des modules supplémentaires de système d'exploitation (25b, 25c) pour fournir des fonctionnalités optionnelles de système d'exploitation en réaction à une réception d'un message provenant du serveur (30) pour libérer ou bloquer l'accès au au moins un module supplémentaire de système d'exploitation (25b, 25c).

2. Procédé selon la revendication 1, dans lequel, avant l'étape de modification, il est décidé dans le serveur (30), sur la base de la liste de modules interrogée, si le au moins un module supplémentaire de système d'exploitation (25b, 25c) doit être activé ou désactivé au moyen d'une instruction correspondante donnée à l'élément de sécurité (20).

3. Procédé selon la revendication 1, dans lequel le message provenant du serveur (30) est un message OTA.

4. Procédé selon la revendication 3, dans lequel le message est envoyé par le serveur (30) à l'élément de sécurité (20) via un réseau radio mobile.

5. Procédé selon la revendication 1, dans lequel l'élément de sécurité (20) est une carte à puce sur laquelle est implémenté un environnement d'exécution (26) qui comporte une machine virtuelle (26a) et une pluralité de bibliothèques de classes, API (26b).

6. Procédé selon la revendication 5, dans lequel au moins une API de la pluralité d'API (26b) est associée au module de système d'exploitation (25b, 25c), de sorte qu'au cas où le droit d'accès détermine qu'un accès au module de système d'exploitation (25b, 25c) ne peut pas être accordé pendant le fonctionnement de l'élément de sécurité (20), l'accès à la au moins une API correspondante est toutefois possible, mais aucune action ne peut être exécutée à partir de la au moins une API.

7. Procédé selon la revendication 1, dans lequel l'étape de modification du droit d'accès au module de système d'exploitation (25b, 25c) est mise en œuvre au moyen d'un domaine de sécurité (27) qui est implémenté sur l'élément de sécurité (20).

8. Procédé selon la revendication 1, dans lequel le procédé comporte les étapes supplémentaires consistant à crypter le message provenant du serveur (30) et à décrypter le message par l'élément de sécurité (20).

9. Procédé selon la revendication 8, dans lequel le décryptage est effectué au moyen d'un domaine de sécurité (27).

10. Procédé selon la revendication 1, dans lequel le procédé comporte l'étape supplémentaire consistant à vérifier une somme de contrôle formée via le message provenant du serveur (30), par l'élément de sécurité (20).

11. Procédé selon la revendication 10, dans lequel la vérification est effectuée au moyen d'un domaine de sécurité (27).

12. Procédé selon la revendication 7, 9 ou 11, dans lequel le domaine de sécurité (27) ne peut pas être supprimé.

13. Élément de sécurité (20) ayant un processeur (21) et une mémoire (24) sur laquelle sont stockés un système d'exploitation (25) qui comporte un noyau de système d'exploitation (25a) et au moins un module supplémentaire de système d'exploitation (25b, 25c) pour fournir des fonctionnalités optionnelles de système d'exploitation, ainsi qu'au moins un droit d'accès associé au module de système d'exploitation (25b, 25c), qui détermine s'il est possible d'accéder au module de système d'exploitation (25b, 25c) pendant le fonctionnement de l'élément de sécurité (20), dans lequel l'élément de sécurité (20) est configuré pour :
- mettre à jour une liste de modules dans laquelle, en plus du au moins un module supplémentaire de système d'exploitation (25b, 25c), est spécifié un état d'activation du au moins un module supplémentaire de système d'exploitation (25b, 25c),
- fournir la liste de modules sur demande d'un serveur (30) afin de déterminer, côté serveur, l'état d'activation des modules de système d'exploitation (25b, 25c),
- modifier le droit d'accès à au moins un des modules supplémentaires de système d'exploitation (25b, 25c) pour fournir des fonctionnalités optionnelles de système d'exploitation en réaction à la réception d'un message provenant d'un serveur (30) par le processeur de l'élément de sécurité (20) afin de libérer ou de bloquer l'accès au au moins un module supplémentaire de système d'exploitation (25b, 25c).

14. Élément de sécurité (20) selon la revendication 13, dans lequel l'élément de sécurité (20) est une carte à puce.

15. Élément de sécurité (20) selon la revendication 13 ou 14, configuré pour mettre en œuvre un procédé pour faire fonctionner un élément de sécurité (20) selon l'une des revendications 1 à 12.
